# FASCICULE DE BREVET EUROPEEN

(11) **EP 0 633 633 B1**
(45) Date de publication et mention de la délivrance du brevet: **09.10.1996**
(21) Numéro de dépôt: 94401520.5
(22) Date de dépôt: 04.07.1994
(51) Int. Cl.: H01R 23/68

(54) **Connecteur pour carte, en particulier pour carte électronique**
Kartenverbinder, insbesondere für elektronische Karte
Card connector, especially for an electronic card

(30) Priorité: 08.07.1993 FR 9308397
(43) Date de publication de la demande: 11.01.1995
(73) Titulaire: FRAMATOME CONNECTORS INTERNATIONAL, 92400 Courbevoie (FR)
(72) Inventeur: Defrasne, André "Champ devant le Frambourg", F-25300 Pontarlier (FR); Pernet, Michel, F-25300 Doubs (FR)
(74) Mandataire: Keib, Gérard

(56) Documents cités:
- EP-A- 0 520 080
- DE-A- 3 445 185
- US-A- 3 701 071
- US-A- 4 944 690

## Description

La présente invention a pour objet un connecteur pour carte, en particulier une carte électronique et plus particulièrement une minicarte à puce.

Le développement important des cartes à puce a eu pour corrolaire que des cartes de petites dimensions, dénommées minicartes sont apparues sur le marché.

Du document EP-A-0 520 080 est connu un connecteur pour carte électronique selon le préambule de la revendication 1.

L'invention se propose de réaliser un connecteur utilisable notamment avec de telles cartes et permettant de les connecter facilement tout en permettant aussi bien leur introduction que leur extraction.

Dans ce but, l'invention propose un connecteur pour carte caractérisé en ce qu'il comporte :
- un socle de forme générale plane, présentant d'une part des éléments de contact électrique ayant une première extrémité dépassant d'au moins un bord du socle, et une deuxième extrémité dépassant d'une face supérieure du socle, et d'autre part, un premier élément de charnière,
- un capot de réception de ladite carte et présentant des glissières d'introduction situées en-dessous du plan inférieur du capot ainsi qu'un deuxième élément de charnière complémentaire du premier élément de charnière, le premier et le deuxième éléments de charnière formant une charnière autour d'un axe de rotation,

le socle et le capot présentant respectivement des premiers et deuxièmes éléments de verrouillage complémentaires disposés à l'opposé des premiers et deuxièmes éléments de charnière pour maintenir le socle et le capot en position fermée de connexion de la carte.

Le connecteur comporte avantageusement un ressort d'ouverture du capot présentant une première branche logée dans la charnière et une deuxième branche logée dans une rainure du capot ou du socle.

La rainure jouxte avantageusement une dite glissière d'introduction.

Lesdites glissières peuvent être sensiblement perpendiculaires audit axe de rotation, c'est-à-dire que la direction d'introduction est perpendiculaire à l'axe de rotation.

Selon un mode de réalisation préféré, le premier et le deuxième éléments de verrouillage sont déconnectables par un effort de poussée sensiblement parallèle audit axe de rotation. En particulier, le capot peut être déformable de manière à permettre ladite déconnexion.

Les deuxièmes éléments de verrouillage sont avantageusement intégrés aux glissières d'introduction.

Le socle peut alors présenter pour la carte une butée située au voisinage d'un premier élément de verrouillage et entre ce dernier et le premier élément de charnière. Ceci permet d'assurer que, lorsque le capot est refermé sur le socle, la carte est dégagée de la région dans laquelle s'effectue le verrouillage. Ceci permet un repositionnement précis de la carte, la butée étant avantageusement une rampe inclinée par rapport à la direction F d'introduction de la carte.

Les premier et deuxième éléments de verrouillage peuvent être des ergots s'interpénétrant, les premier et/ou deuxième éléments de verrouillage présentant un chanfrein d'introduction.

D'autres caractéristiques et avantages de l'invention apparaîtront mieux à la lecture de la description qui va suivre, en liaison avec les dessins qui représentent
- la figure 1, une vue éclatée en perspective d'un connecteur selon un mode de réalisation préféré de l'invention, comportant deux encadrés agrandis de manière à montrer plus précisément le verrouillage du capot sur le socle,
- les figures 2a et 2b représentent, en vue de dessus, respectivement, le socle et le connecteur refermés,
- les figures 3a et 3b, respectivement en perspective vue d'avant, le connecteur en position ouverte, et vue d'arrière, le connecteur en position fermée.
- les figures 4a et 4b, respectivement en vue latérale et en vuede dessus, le socle du connecteur.

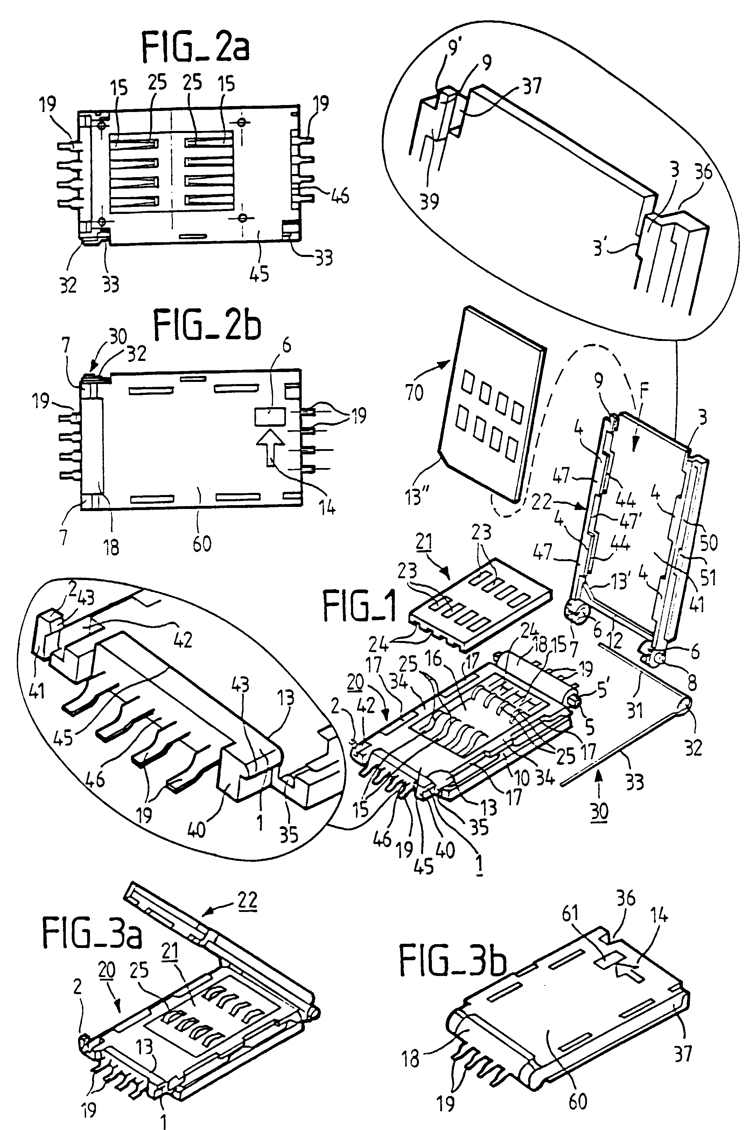

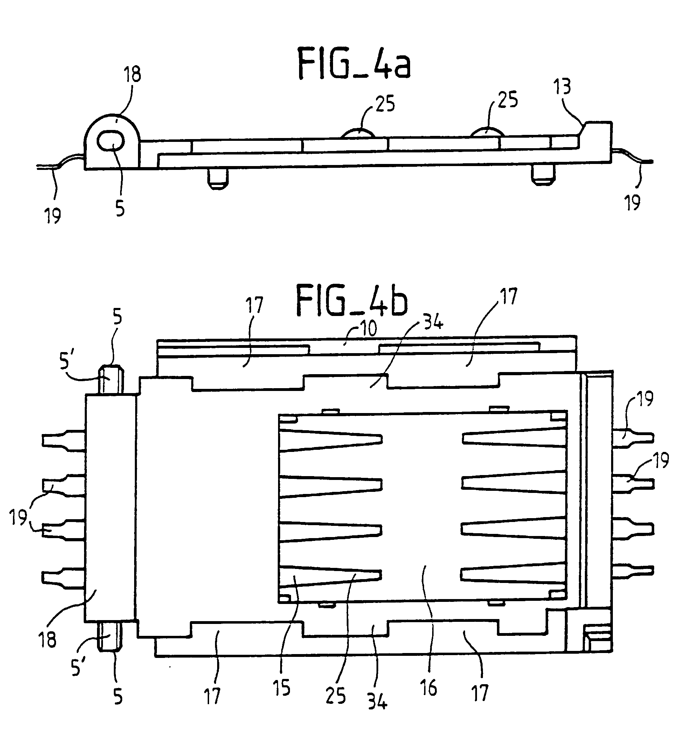

Sur la figure 1 et les figures 4a et 4b, on voit que le socle qui est désigné par le repère général 20 comporte des lames 15 formant des éléments de contact moulées dans la masse de celui-ci. Chaque lame 15 comporte une extrémité 19 qui dépasse d'un bord longitudinal 46 et une autre extrémité recourbée 25 qui dépasse de la face supérieure 45 du socle 20. Les extrémités 25 sont disposées dans une ouverture sensiblement rectangulaire 16 qui leur permet un débattement vertical. L'ouverture 16 présente au voisinage de ses extrémités longitudinales, des portions 24 formant un fond et permettant le maintien d'une plaquette 21 de protection des contacts, laquelle comporte des ouvertures 23 à travers laquelle passent les parties recourbées 25. La plaquette 21 présente également, dans sa partie inférieure, des rainures longitudinales 24 permettant le passage des portions planes de la lame 15 disposées entre la partie recourbée 25 et le corps du socle porte-contacts 20.

On a représenté deux rangées de quatre conducteurs 15 se faisant face et espacés longitudinalement, et dont les extrémités 19 dépassent du socle 20 par des bords longitudinaux opposés 46.

Un de ces bords 46 est bordé à sa partie supérieure par une portion de cylindre 18 dont les extrémités se prolongent par des axes semi-cylindriques 5 comportant chacun deux méplats 5' et formant un premier élément de charnière. L'autre bord longitudinal 46 présente, à chacune de ses extrémités, des ergots latéraux référencés 1 et 2 présentant des chanfreins d'introduction 43.

L'ergot 1 fait partie d'un prolongement 40 perpendiculaire à l'axe F d'introduction de la carte 70, qui présente, à sa partie arrière une rampe inclinée 13 dont la fonction sera explicitée par la suite.

Le capot 22 présente en-dessous de sa face inférieure 41 deux glissières longitudinales 4 situées au voisinage de ses bords longitudinaux de manière à guider la carte dans des rainures 44. Chaque glissière 4 présente trois sections, à savoir deux sections 47 espacées l'une de l'autre en 47' et, à une extrémité longitudinale, une section 3 pour l'une des glissières, et une section 9 pour l'autre glissière, ces sections formant des encoches ou ergots destinés à coopérer respectivement avec les ergots 1 et 2. Le capot 22 présente dans sa partie arrière, une butée 12 munie à l'une de ses extrémités d'un pan incliné 13'.

A l'extrémité opposée aux sections 36 et 39, le capot 22 présente deux logements cylindriques borgnes 6 pourvus chacun d'une ouverture 7. L'un de ces logements se prolonge vers l'extérieur par un axe 8 destiné à recevoir la boucle centrale spiralée d'un ressort 30 présentant une première branche 31 logée entre la partie cylindrique 18 et le corps du capot 20 et un deuxième bras 33 qui est logé dans une rainure 50 jouxtant une des glissières 4 dans laquelle il est retenu en particulier par une section 51 dirigée vers l'intérieur. La branche 31 peut, en variante, être logée dans le capot 22 au voisinage des logements 6 et de la branche 33 dans une rainure 35 du socle 20.

Le montage et le démontage du capot 22 sont obtenus lors du positionnement des méplats 5 dans l'axe des ouvertures 7, position dans laquelle le capot 22 est perpendiculaire au socle 20. Cette position est obtenue en forçant le ressort d'ouverture 30, lequel, en position d'ouverture normale représentée à la figure 3a, amène le capot 22 à former un angle d'environ 45° avec le socle 20.

Le verrouillage du capot 22 sur le socle 20 s'effectue par la coopération des ergots latéraux 1 et 2 du socle 20 avec les encoches des ergots 3 et 9 qui font partie des glissières d'introduction 4 de la carte dans le capot.

La mise en oeuvre du connecteur est alors la suivante : la carte est introduite dans les glissières 4 jusqu'à venir s'appuyer sur la butée 12 située au voisinage immédiat des logements cylindriques 6. La carte comporte un pan coupé 13" qui vient s'appuyer sur le plan incliné 13' formant détrompeur. En cas d'introduction de la carte dans un sens erroné, le pan incliné 13' bute contre l'extrémité droite de la carte et empêche sa complète introduction, ce qui interdit la fermeture du capot 22. Le capot 22 est rabattu sur le socle 20 et la fermeture s'effectue par déformation élastique du boîtier 22 grâce en particulier aux chanfreins 43 qui viennent repousser les faces interne 3' et externe 9' des ergots 3 et 9, et/ou par la présence d'un jeu latéral dans les charnières.

Le déverrouillage s'effectue par poussée dans le sens de la flèche 14 et par déformation latérale du capot 22 de manière à libérer les ergots 1 et 2, ce qui permet au capot 22 de s'ouvrir sous l'action du ressort 30. L'ouverture ne nécessite donc qu'un effort de poussée latérale qui, dans l'exemple ci-dessus, est perpendiculaire au sens d'introduction de la carte 70. Pour faciliter la déconnexion, la face supérieure 60 du capot 22 peut présenter une rainure non débouchante 61 formant une zone d'accrochage pour le doigt d'un utilisateur.

Lors de la fermeture du capot 22, dans le cas où la carte n'est pas en contact avec la butée 12, la rampe 13 vient repousser celle-ci pour la positionner correctement, et en fin de verrouillage, les régions médianes 34 viennent se disposer dans les logements 47' séparant les sections 47 pour plaquer la carte vers la face inférieure 41 du capot 22 alors que les sections 47 viennent se loger en 17 dans le socle 20. De la même façon, la section d'extrémité 39 vient se loger en 42 au voisinage de l'ergot 2 alors que le bord longitudinal 50 vient refermer la rainure 35. Il présente une région d'interruption 51 que vient remplir la section 10 dirigée vers l'intérieur.

## Revendications

1. Connecteur pour carte comportant :
- un socle (20) de forme générale plane, présentant d'une part des éléments de contact électriques (15) ayant une première extrémité (25) dépassant d'une face supérieure du socle (20), et d'autre part, un premier élément de charnière (5, 18),
- un capot (22) de réception de ladite carte et présentant des glissières d'introduction (44) situées en dessous du plan inférieur (41) du capot (22) ainsi qu'un deuxième élément de charnière (6, 7, 8) complémentaire du premier élément de charnière (5, 18), le premier (5, 18) et le deuxième (6, 7, 8) formant une charnière autour d'un axe de rotation,
le socle (20) et le capot (22) présentant respectivement des premiers et deuxièmes éléments de verrouillage (1, 2, 3, 9) complémentaires disposés à l'opposé des premiers et deuxièmes éléments de charnière (5, 6, 7, 8, 18) pour maintenir le socle (20) et le capot (22) en position fermée de connexion de la carte,
ce connecteur étant caractérisé en ce qu'une seconde extrémité (19) desdits éléments de contact électriques (15) dépasse d'au moins un bord du socle (20) et en ce que lesdits premier et deuxième éléments de verrouillage (1, 2, 3, 9) sont déconnectables par un effort de poussée sensiblement parallèle audit axe de rotation

2. Connecteur selon la revendication 1, caractérisé en ce qu'il comporte un ressort (30) d'ouverture du capot, présentant une première branche (31) logée dans la charnière (5, 18) et une deuxième branche (33) logée dans une rainure (35, 50) du socle (20) ou du capot (22).

3. Connecteur selon la revendication 2, caractérisé en ce que ladite rainure (50) jouxte une dite glissière d'introduction (44).

4. Connecteur selon une des revendications précédentes, caractérisé en ce que lesdites glissières (44) sont sensiblement perpendiculaires audit axe de rotation.

5. Connecteur selon la revendication 1, caractérisé en ce que le capot (22) est déformable de manière à permettre ladite déconnexion.

6. Connecteur selon une des revendications précédentes, caractérisé en ce que les deuxièmes éléments de verrouillage (3, 9) sont intégrés aux glissières d'introduction (44).

7. Connecteur selon la revendication 6, caractérisé en ce que le socle (20) présente pour la carte une butée (13) située au voisinage d'un premier élément de verrouillage (1, 2,) et entre ce dernier et le premier élément de charnière (5, 18).

8. Connecteur selon la revendication 7, caractérisé en ce que la butée (13) est une rampe inclinée par rapport à une direction (F) d'introduction de la carte (70).

9. Connecteur selon une des revendications précédentes, caractérisé en ce que les premiers et deuxièmes éléments de verrouillage sont des ergots s'interpénétrant.

10. Connecteur selon la revendication 9, caractérisé en ce que les premiers et/ou les deuxièmes éléments de verrouillage présentent un chanfrein d'introduction (43).

## Patentansprüche

1. Verbinder für Karte, mit:
- einem Sockel (20) von im allgemeinen ebener Form, der einerseits elektrische Kontaktelemente (15), die ein erstes Ende (25) haben, das über eine Oberseite des Sockels (20) vorsteht und andererseits ein erstes Scharnierelement (5) haben,
- einem Aufnahmedeckel (22) der Karte, der Einführschienen (44) aufweist, die unterhalb der Unterseite (41) des Deckels (22) angeordnet sind, sowie ein zweites zum ersten Scharnierelement (5, 18) komplementäres Scharnierelement(6, 7, 8) aufweist, wobei das erste (5, 18) und das zweite (6, 7, 8) ein Scharnier um eine Drehachse bilden,
wobei der Sockel (20) und der Deckel (22) erste bzw. zweite komplementäre Verriegelungselemente (1, 2, 3, 9) aufweisen, die entgegengesetzt von den ersten bzw. den zweiten Scharnierelementen (5, 6, 7, 8, 18) angeordnet sind, um den Sockel (20) und den Deckel (22) in geschlossener Verbindungsposition der Karte zu halten,
wobei der Verbinder dadurch gekennzeichnet ist, daß ein zweites Ende (19) der elektrischen Kontaktelemente (15) wenigstens einen Rand des Sockels (20) überragt, und daß die ersten und zweiten Verriegelungselemente (1, 2, 3, 9) durch eine Druckkraft lösbar sind, die im wesentlichen parallel zur Drehachse verläuft.

2. Verbinder nach Anspruch 1 dadurch gekennzeichnet, daß er eine Öffnungsfeder (30) des Deckels aufweist, die einen ersten Arm (31), der in dem Scharnier (5, 18) angebracht ist, und einen zweiten Arm (33) aufweist, der in einer Kerbe (35, 50) des Sockels (20) oder des Deckels (22) aufgenommen ist.

3. Verbinder nach Anspruch 2, dadurch gekennzeichnet, daß die Kerbe (50) sich an eine Gleit- bzw. Einführschiene (44) anschließt.

4. Verbinder nach einem der vorhergehenden Ansprüche, dadurch gekennzeichnet, daß die Einführgleitschienen (44) im wesentlichen senkrecht zur Drehachse verlaufen.

5. Verbinder nach Anspruch 1, dadurch gekennzeichnet, daß der Deckel (22) derart verformbar ist, daß er das Lösen erlaubt.

6. Verbinder nach einem der vorhergehenden Ansprüche, dadurch gekennzeichnet, daß die zweiten Verriegelungselemente (3, 9) in den Einführgleitschienen (44) integriert sind.

7. Verbinder nach Anspruch 6, dadurch gekennzeichnet, daß der Sockel (20) für die Karte einen Anschlag (13) aufweist, der in der Nähe eines ersten Verriegelungselements (1, 2) und zwischen diesem letzteren und dem ersten Scharnierelement (5, 18) angeordnet ist.

8. Verbinder nach Anspruch 7, dadurch gekennzeichnet, daß der Anschlag (13) eine Rampe ist, die bezüglich einer Einführrichtung (F) der Karte (70) geneigt ist.

9. Verbinder nach einem der vorhergehenden Ansprüche, dadurch gekennzeichnet, daß die ersten und zweiten Verriegelungselemente ineinander eindringende Nocken sind.

10. Verbinder nach Anspruch 9, dadurch gekennzeichnet, daß die ersten und/oder die zweiten Verriegelungselemente eine Einführabphasung (43) aufweisen.

## Claims

1. Card connector comprising:
- a base (20) of a generally planar shape, having on the one hand electrical contact elements (15) with a first end (25) extending beyond an upper face of the base (20), and on the other hand a first hinge element (5, 18),
- a cover (22) for receiving the said card and having introduction channels (44) located below the lower plane (41) of the cover (22) as well as a second hinge element (6, 7, 8) complementary to the first hinge element (5, 18), the first (5, 18) and the second (6, 7, 8) forming a hinge about an axis of rotation,
the base (20) and the cover (22) having respectively complementary first and second locking elements (1, 2, 3, 9) disposed opposite the first and second hinge elements (5, 6, 7, 8, 18) to hold the base (20) and the cover (22) in the closed position for connection of the card,
the connector being characterised in that a second end (19) of the said electrical contact elements (15) extends beyond at least one edge of the base (20), and in that the said first and second locking elements (1, 2, 3, 9) can be disconnected by a pushing force substantially parallel to the said axis of rotation.

2. Connector according to claim 1, characterised in that it comprises a spring (30) for opening the cover, having a first arm (31) housed in the hinge (5, 18) and a second arm (33) housed in a groove (35, 50) in the base (20) or in the cover (22).

3. Connector according to claim 2, characterised in that the said groove (50) adjoins one of the said introduction channels (44).

4. Connector according to one of the preceding claims, characterised in that the said channels (44) are substantially perpendicular to the said axis of rotation.

5. Connector according to claim 1, characterised in that the cover (22) can be deformed so as to permit the said disconnection.

6. Connector according to one of the preceding claims, characterised in that the second locking elements (3, 9) are integrated into the introduction channels (44).

7. Connector according to claim 6, characterised in that the base (20) has a stop (13) for the card located in the vicinity of a first locking element (1, 2) and between this element and the first hinge element (5, 18).

8. Connector according to claim 7, characterised in that the stop (13) is a slope inclined with respect to a direction (F) in which the card (70) is introduced.

9. Connector according to one of the preceding claims, characterised in that the first and second locking elements are interlocking projections.

10. Connector according to claim 9, characterised in that the first and/or second locking elements have a chamfered introduction region (43).
